# EUROPEAN PATENT APPLICATION

(11) **EP 3 591 954 A1**
(43) Date of publication of application: **08.01.2020**
(21) Application number: 18181619.0
(22) Date of filing: 04.07.2018
(51) Int. Cl.: H04N 1/60

(54) **METHOD FOR IMPROVING MECHANICAL ROBUSTNESS OF A COLOR PRINT**

(71) Applicant: OCE Holding B.V., 5914 CA Venlo (NL)
(72) Inventor: CURRAN, Joshua D., 5914 CA Venlo (NL); QUAEDACKERS, Richard J., 5914 CA Venlo (NL); STUART, Gregory C., 5914 CA Venlo (NL); SOUTAR, Colin A., 5914 CA Venlo (NL); MAKAREVSKI, Serguei, 5914 CA Venlo (NL); DUNBAR, Cristian E.B., 5914 CA Venlo (NL); BORCHERT, Christopher J., 5914 CA Venlo (NL); SON, Daniel M., 5914 CA Venlo (NL)
(74) Representative: OCE IP Department

(57) **Abstract**

A method for improving the abrasion resistance of a printed image, the image being processed digitally by a colour management system for a print process comprising a set of colorants, the colour management system transforming a colour of a part of the image into a colorant coverage for said part of the printed image, wherein a sum of coverage values for all colorants in the set of colorants is larger than a user-selectable threshold value. In a preferred embodiment the set of colorants includes a colorless, transparent colorant.

## Description

### BACKGROUND OF THE INVENTION

### 1. Field of the invention

The invention relates to a method for improving the abrasion resistance of a printed image, that results from an image being processed digitally by a color management system for a print process comprising a set of colorants, the color management system transforming a color of a part of the image into a colorant coverage for said part of the printed image.

### 2. Description of the Related Art

Known color print systems apply colorants, e.g. ink or toner, according to digital image data in order to generate a printed image. The amount of colorants, also called the colorant coverage, that is locally applied, is derived from the image data by a conversion of colors as defined in the image data. This conversion process is also known as color management. It uses a calibration, or profile, which depends on the set of colorants that is available in the print system and on the type of substrate that is printed upon. This set of colorants is usually comprised of at least a cyan, magenta, yellow and black colorant, in short CMYK. Additionally other chromatic colorants, such as light magenta, light cyan, orange, green and violet may be present and further achromatic colorants, such as white and a colorless, transparent colorant may be used. The presence of these additional colorants makes the calibration more complex, but in principle not different. A colorant coverage is usually within a range of 0 to 1, 0 meaning that locally no colorant is applied and 1 meaning that a full layer of a colorant, or a maximum amount of colorant, is applied. In some print systems values of more than 1 are used to indicate that more than a full layer of a colorant is applied, e.g. by overstriking already printed parts of the substrate. Combinations of colorant coverages of various colorants set up the color gamut of a print system. The sum of the colorant coverages is known as the total area coverage (TAC). It is not unusual that an upper limit is applied for the TAC, in dependence on a combination of colorants and substrate type. In particular, such an upper limit prevents excessive bleeding in the printed image, which deteriorates the print quality, or excessive curling and cockling of the substrate.

It is noted that, although many print systems apply colorants discretely in the form of dots or in full or empty pixels, the above-mentioned coverage values for colorants are considered to be contone, that means having so many levels that a difference between two consecutive levels will not be noticeable. A halftoning process converts these contone values into printable levels.

It is well known that on a white substrate, such as paper, combinations of cyan, magenta and yellow may result in an achromatic color, which may also be obtained by applying black colorant only, as well as having black colorant partially replacing comparable amounts of cyan, magenta and yellow. This is also the case for other colorants, whose application may substitute some other colorant combinations or whose application may have little effect on the resulting color. This is for example the case when applying a colorless, transparent colorant. Thus, the color management system selects for each color one of the possible combinations of colorants that result in the specific color.

These print systems and their color management are used to print images on many different substrates for many different purposes. Some of these comprise purposes wherein the image is exposed to mechanically abrasive conditions, such as images on floor elements that people walk on. It was noticed by the inventors that the degradation of the image varies from one part to another, despite being equally exposed to abrasive conditions. It is known to overcoat a printed image with a protective, abrasion resistant layer, but this takes a second process step.

An object of the present invention is to obtain a print process wherein a uniform degradation of color prints that are exposed to mechanically abrasive conditions occurs.

### SUMMARY OF THE INVENTION

In order to achieve this object, the method according to the invention comprises a step in the color management transformation of a color of a part of the image into a colorant coverage, wherein a sum of coverage values for all colorants in the set of colorants is larger than a user-selectable threshold value.

In contrast to available methods for reducing mechanical degradation, wherein an additional layer is applied over an image, known as an overcoat layer, the invention applies a combination of colorants simultaneously. Not only the print process is accelerated in this way, but also less ink is applied. The invention results from the observation that image parts with little ink show more degradation than parts with a high coverage of ink. The color equivalence of several possible combinations of colorants enables the selection of a combination for which the sum of coverage values is larger than a user-selectable threshold. Thus, colorant combinations with a low total coverage are excluded from being applied and image parts showing a high degradation are avoided. This also has the consequence that no part of the substrate is left clear of colorant.

Preferably, the set of colorants comprises a transparent, colorless one. The application of this colorant has relatively little effect on a resulting color, which facilitates the selection of a colorant combination of the required color. By selecting a value of 1, or 100%, every part of the image is covered with a full layer of colorant, thereby reducing the degradation in mechanically abrasive conditions.

Preferentially, the present invention is applied in an ink jet print system comprising UV-curable inks. These inks remain on the application side of the substrate and therefore form a closed layer when a full coverage is applied.

Further details of the invention are given in the dependent claims. The present invention may be embodied in a user interface for a color management system, a printer system and a software product that is applicable in a print system.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
Figure 1 is a flat bed print system wherein the invention is applicable; and
Figure 2 is a user interface of a color management system according to the invention.

### DETAILED DESCRIPTION OF EMBODIMENTS

The present invention will now be described with reference to the accompanying drawings, wherein the same or similar elements are identified with the same reference numeral.

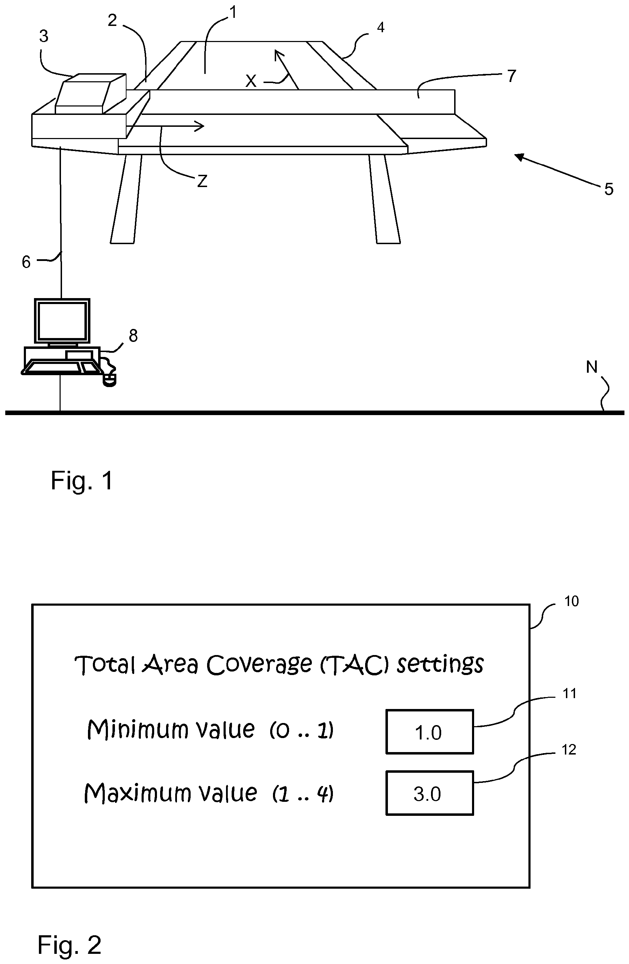

Figure 1 is a print system 5 comprising a workstation 8 and a print engine 4. The workstation 8 may be a personal computer or another device for preparing image data in print jobs for prints to be printed by the print system. This workstation has access to a network N, either wired or wireless, for receiving print jobs comprising image data from other image preparation devices (not shown). The workstation 8 is configured as a print controller that schedules the different print jobs and converts the image data into print data. This conversion comprises a color conversion from device independent colors to colors of the available colorants in the print engine 4. The available colorants are for example cyan (C), magenta (M), yellow (Y), black (K), white (W),varnish (V), light cyan (Ic), light magenta (Im), green (G) and orange (O). These print data are communicated to the print engine by a dedicated communication interface 6. Inside the print engine 4, an engine controller (not shown) organizes the print data into print swaths and controls the print engine to apply the colorants according to the print data.

The print engine 4 comprises a flat bed surface 1 for supporting a flat receiving medium. The height of the flat bed surface is adjustable to accomodate the thickness of the receiving medium, thus keeping a predetermined distance between the surface of the receiving medium and the print heads in the print head carriage 3. The print head carriage 3 is capable of moving across the flat bed in two directions, indicated in Fig. 1 as Z and X direction. Z is the scanning direction wherein the carriage reciprocates along gantry 7 to print a swath of ink drops that constitute the printed image, X is the subscanning direction wherein gantry 7 makes a stepwise movement at the time the gantry is reversing its reciprocating movement in the scanning direction Z. The movement of the gantry is guided by guide rails 2 at both sides of the flatbed.

Figure 2 shows a user interface for a color management system according to the invention. The interface 10 shows two settings for the Total Area Coverage (TAC), which is the sum of the coverage values of the individual colorants. The individual values range from 0 to 1, so the sum is in the range of 0 to the number of colorants. In the present print system four colorants plus a colorless, transparent colorant is used. Both a minimum value 11 and a maximum value 12 are set in this interface. The range for the minimum value is 0 to 1, whereas the range for the maximum value is 1 to 4, in this embodiment. In known systems only a maximum is used, such that a colorants combination for a specific color is only acceptable if the TAC for this combination is lower than the selected value. In the present system also a minimum value 11 can be selected, such that an acceptable colorants combination has a TAC that is larger than the selected value. In normal print situations, the minimum value is 0, in order to obtain an area without any colorant coverage if a white color or a substrate color is specified in the image data. However, in special situations, such as a printed image for use under mechanically abrasive conditions, it is convenient to have a minimum TAC value that is larger than 0, preferably 1, such that all the substrate is covered with a full layer of colorant, which is in the present system a UV-curable ink.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. A method for improving the abrasion resistance of a printed image, that results from an image being processed digitally by a color management system for a print process comprising a set of colorants, the color management system transforming a color of a part of the image into a colorant coverage for said part of the printed image, wherein a sum of coverage values for all colorants in the set of colorants is larger than a user-selectable threshold value.

2. The method according to claim 1, wherein the set of colorants comprises a colorless, transparent colorant.

3. The method according to claim 1, wherein the print process is an ink jet process.

4. The method according to claim 3, wherein the colorant is a UV-curable ink.

5. A color management system, comprising a profiling module and a user interface for setting parameters to control a transformation of a color of a part of an image into a coverage value for said part of the image, the user interface comprising a field for setting a lower limit for a sum of the coverage values for all colorants.

6. A print system for printing an image on a substrate, the print system comprising a controller for processing digital image data into print instructions, the controller being configured to execute the method according to claim 1.

7. A non-transitory computer readable medium storing computer executable instructions for applying the method according to claim 1.
